# EUROPEAN PATENT APPLICATION

(11) **EP 3 462 400 A1**
(43) Date of publication of application: **03.04.2019**
(21) Application number: 18197789.3
(22) Date of filing: 28.09.2018
(51) Int. Cl.: G06Q 30/02, G06Q 30/00

(54) **METHOD FOR EXCHANGING INFORMATION CONCERNING A PRODUCT AND A CORRESPONDING SYSTEM**

(30) Priority: 28.09.2017 IT 201700109087
(71) Applicant: Enosocial S.R.L., 37138 Verona (IT)
(72) Inventor: BIANCHI, Andrea, 37138 Verona (IT)
(74) Representative: Feltrinelli, Secondo Andrea

(57) **Abstract**

The present invention relates to a telematic method for the exchange of information, between at least one user (A1, A2, A3) and at least one commercial activity (EC), relating to a product, comprising the following steps:
- determining the position of at least one user (A1, A2, A3), with respect to at least one commercial activity (EC) (step 100);
- comparing the position of at least one user (A1, A2, A3) with respect to the position of at least one commercial activity (EC) (step 110);
- identifying (step 120) at least one product desired by the at least one user (A1, A2, A3) and providing (step 140), by the at least one commercial activity (EC), information available on such at least one desired product, only if the at least one user (A1, A2, A3) is in the proximity of such at least one commercial activity (EC) (step 120).

## Description

The present invention relates to a method for exchanging information concerning a product and a corresponding system.

### PRIOR ART

In the sector of commercial distribution of products, there are various systems, for example telematics, which allow users to obtain real-time information regarding products for sale in one or more commercial activities, as well as compare the prices of such products in order to, for example, find the cheapest commercial offer for a desired product.

With these systems, a user can obtain information and possibly make a purchase order, regardless of where he is. For example, it may be in a Commercial Activity EC, where he has gone to check the prices of a desired product and decide to send, from there, a purchase order to another Commercial Activity EC that, for that product, applies a price lower.

Although these systems are advantageous for users, they often penalize merchants, who are not able to keep prices reserved for their products on sale, and then run to risk to frustrate if not compromise their marketing strategies.

Therefore, the need to develop a method for the exchange of information on products on the market which solves the aforementioned problem is felt in the sector.

Having said that, it will be seen that, in the present description and in the following claims, reference will be made in particular to the commercial distribution of bottled wine, but the man skilled in the art will have no difficulty in understanding that the technical teachings of the present invention are also applicable to any other commercial sector, for example in food distribution, footwear, apparel, crafts and other sectors.

The present invention, however, has been conceived and is particularly advantageous in the wine distribution sector.

### OBJECTS OF THE INVENTION

The main object of the present invention is to improve the prior art in the field of commercial distribution of products, in particular in the wine distribution sector.

A further object of the present invention is to provide a telematic method for the exchange of information concerning a product, between a user and a Commercial Activity EC, which is selective.

Another object of the present invention is to provide a telematic method for the exchange of information concerning a product, between a user and a Commercial Activity EC, which is easy to implement.

A further object of the present invention is to provide a system for the implementation of a telematic method for the exchange of information concerning a product, between a user and a Commercial Activity EC, which is easy to achieve at competitive costs. These and further objects are achieved by a telematic method for the exchange of information, between a user and a Commercial Activity EC, concerning a product, according to the appended claim 1 and by a system according to the appended claim 13. Further advantageous features of the method and of the system are described in the dependent claims.

### BRIEF DESCRIPTION OF THE DRAWINGS

The features of the invention will be better understood by any man skilled in the art from the following description and from the appended drawings, given by way of a non-limiting example, in which:

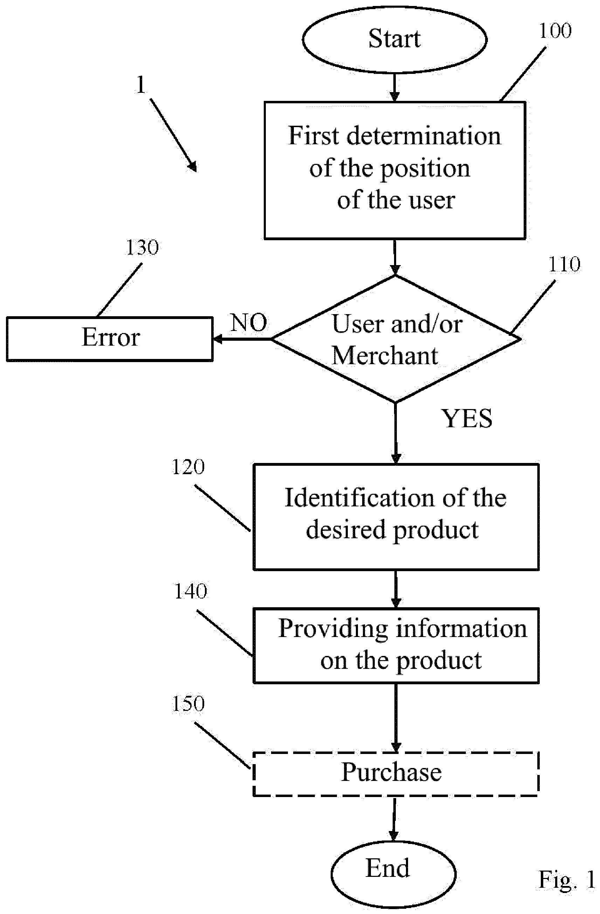

figure 1 is a flowchart illustrating the main steps of the method according to the present invention;
figure 2 shows in detail some sub-steps relating to some steps of the flowchart method in figure 1;
figure 3 shows in detail other sub-steps of a step of the flowchart method in figure 1; figure 4 is a detailed representation of yet other sub-steps of the flowchart method in figure 1;
figure 5 illustrates in detail some sub-steps relating to a further optional step of the flowchart method in figure 1; and
figure 6 shows a system for implementing the method according to the present invention.

### EMBODIMENTS OF THE INVENTION

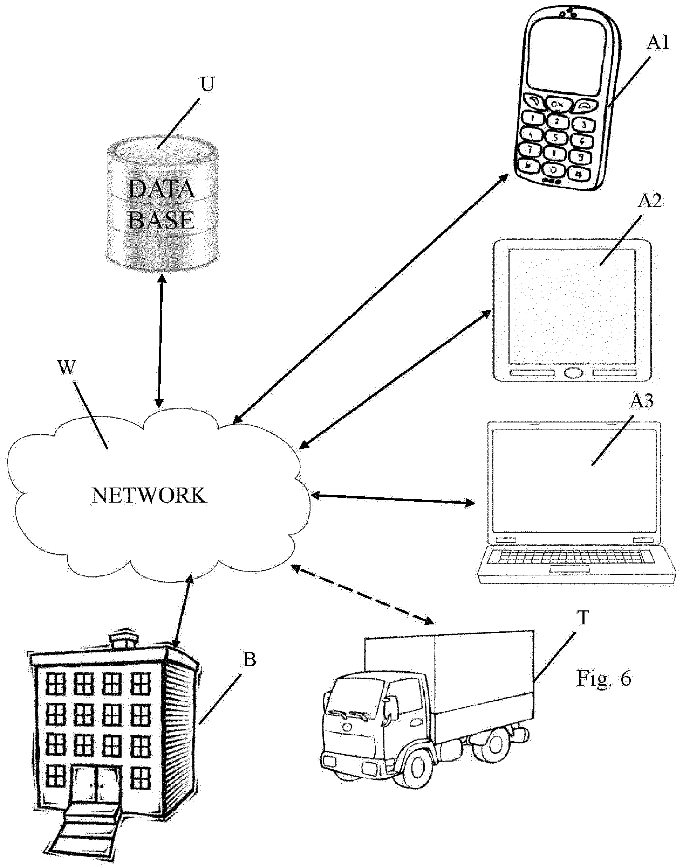

Before discussing the telematic method according to the present invention and with reference to the accompanying figures, it will be noted that such a method, being telematic, obviously presupposes for the man skilled in the art the possibility of exchanging information through a communications network (W in Figure 6), and therefore in particular the fact that a user is provided with a terminal device, for example a smart phone, a tablet or a personal computer (see, by way of example, the devices shown in figure 6 and indicated by references A1, A2 and A3), connectable in any suitable manner to such a communications network W (which is also of any suitable type), in turn connectable to a data storage unit U, which stores the data relating to one or more commercial activities which implement the method according to the present invention, as well as the data relating to the products available in each of such commercial activities.

With particular reference to the wine distribution sector, one or more commercial activities may be, for example one or more cellars and/or wine shops and the available products may be the bottles of wine provided for sale.

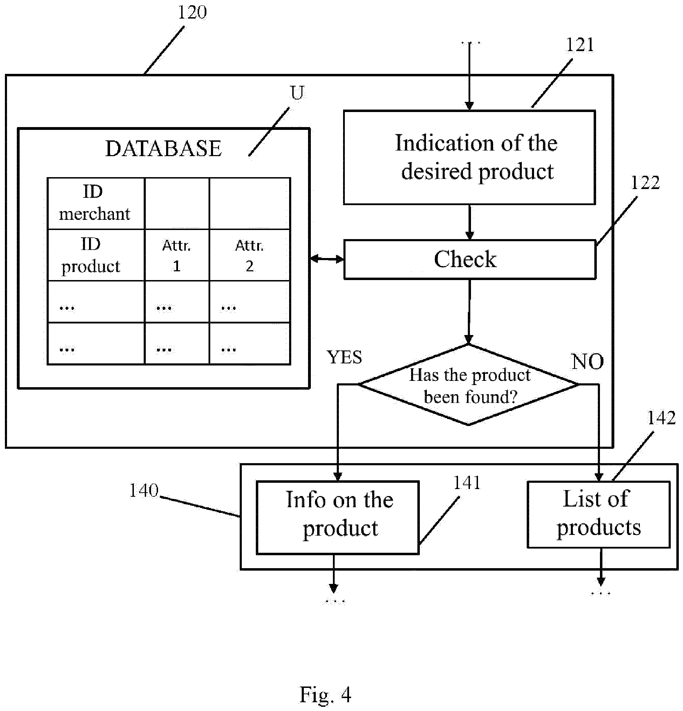

The data relating to the commercial activities and their products can be stored on the data storage unit U, in one or more databases of any suitable type and it is contemplated, again in a manner known to the man skilled in the art, that each commercial activity EC is identifiable by its own identifier - for example "merchant ID" in figure 4 - and by various attributes, for example its GPS position, address, etc. stored on the storage unit U.

Likewise, for purely exemplifying and non-limiting purposes of the present invention, it is contemplated that each product made available by a commercial activity EC can be identified by means of a product identifier ("Product ID" in figure 4) and some attributes ("Attr.1","Attr.2", ... in figure 4). In particular, it is contemplated that the identifier of a product (product ID) may be one or more selected from a product image, a QR code, a string of characters or a voice signal, and that attributes Attr.1, Attr.2, ... may include one or more of the following: a description of the product, the origin of the product, the availability at said commercial activity EC, the timing of any delivery, the minimum and/or maximum quantities that can be purchased, the size, the full price, an applicable discount and the like.

In the specific case of the wine distribution sector, the attributes of each product, which can be stored in the storage unit U, include in particular one or more of the following: the name of the producer, the description of the wine, the year of production, the type of grapes used in production, the alcohol content, an image of the label and more.

The man skilled in the art will have no difficulty in understanding that the information that can be stored on the storage unit U may be the most diverse and is not limited by the present description, and the storage unit U itself may be of any suitable type, distributed between multiple locations or concentrated, provided it is suitable for the purpose.

That said, it will be noted that the telematic method according to the present invention for the exchange of information, between at least one user (A1, A2, A3 in figure 6) and at least one commercial activity EC, relating to a desired product, is indicated with reference numeral 1 and comprises at least a first step (100) for determining the position of said at least one user, with respect to said at least one commercial activity EC (step 100) and a subsequent comparison step between said position of said at least one user (A1, A2, A3) with respect to the position of said at least one commercial activity EC (step 110).

Advantageously, the method according to the present invention provides that a further identification step (step 120) of at least one desired product, by said at least one user, and the subsequent provision (step 140), by said at least one commercial activity EC, of information available regarding said at least one desired product identified by the customer, occur only if said at least one user (A1, A2, A3) is in proximity of said at least one commercial activity EC (step 110).

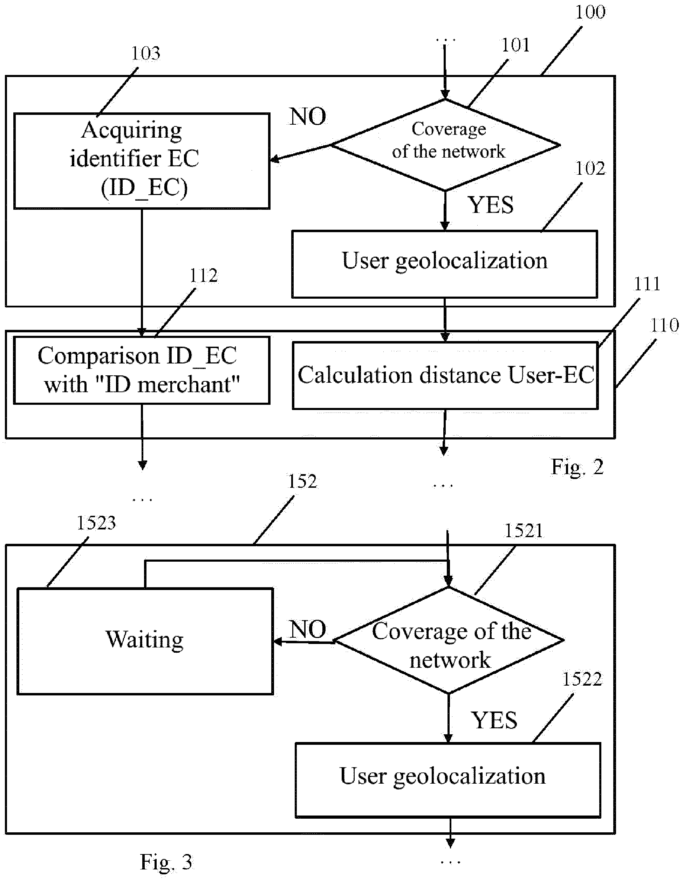

In this regard, the method according to the present invention provides that the step (100) for determining the position of said at least one user, with respect to said at least one commercial activity EC, comprises, according to a first variant (see figure 2), a sub-step for checking the coverage of at least one communications network W (step 101); and, if so, i.e. if a communications network W is active, a further sub-step for determining the position of said at least one user, by means of a geolocation function implemented by means of the communications network W (step 102).

If, however, a communication network W is not active, the method provides for another variant, a sub-step for determining the position of said at least one user by acquiring, by said user, at least one identifier of at least one commercial activity EC (ID_EC) (103). The identifier of the commercial activity EC (merchant ID), could be for example an image, a QR code, a string of characters or a voice signal that the user can acquire in any suitable manner, for example through his own terminal device, in the most obvious way for the man skilled in the art and will be an identifier, pre-stored in the storage unit U, made available in the commercial activity EC and therefore available to the at least one user, only if he is actually in this commercial activity EC.

More specifically, the QR code contains all the information necessary to recognize the cellar or the wine, so this code is to be considered "speaking" or containing the information necessary to recognize it.

This can be implemented, for example because in the smart-phone or the tablet of the user a program or app is present to implement the method according to the present invention or steps thereof, as well as data (downloaded or present) of the cellars or commercial activities.

Again according to the first variant, the method according to the present invention provides that the comparison step (110) between said position of said at least one user, with respect to the position of said at least one commercial activity EC (step 110), comprises calculating the distance between said position of said at least one user and a position of said at least one commercial activity EC (phase 111), and that if said distance is less than a certain predetermined threshold, for example less than 500m, one moves to said step (120) of identification of at least one desired product by said at least one user, otherwise, an error message is emitted (step 130).

If the difference between the position of the user and that of the commercial activity EC is less than the threshold, it means that the user is in or near the commercial activity EC. According to the second variant, the method provides that, instead, the identifier acquired by the user (ID_EC) is compared with a pre-stored identifier of said at least one commercial activity EC (merchant ID) (112), and if the identifier acquired by the user (ID_EC)and the pre-stored identifier of said at least one commercial activity EC (merchant ID) match, one moves to said step (120) of identification of at least one desired product by said at least one user, or otherwise, an error message is emitted (step 130).

This is because, if the identifier acquired by the user (ID_EC) corresponds to that of the commercial activity EC (merchant ID), this means that the user is inside the commercial activity EC or in the vicinity thereof.

It will then be the responsibility of the operator to modify and store on the storage unit U, with a certain frequency, the identifier of his commercial activity EC, for example weekly or more frequently, so that it is not possible, for a user, to be at a distance from a commercial activity EC and enter a correct identifier.

Now, once the method has moved to the identification step 120 of at least one product, the following indication sub-steps (121) are provided, of indicating, by said at least one user, at least one identifier of said at least one desired product (ID product), and comparing (step 122) said at least one identifier of said at least one desired product with a predefined list of product identifiers, available in said at least one commercial activity EC (figure 4).

If the comparison gives a positive result, the method provides for the step of providing (step 140), to said at least one user, the information associated with said at least one identifier of said at least one desired product (sub-step 141). Otherwise, if said comparison gives a negative result, the method provides for providing, to said at least one user, the information associated with all the identification codes of said list of products available in said at least one commercial activity EC (sub-step 142).

It will be noted that the step of providing the above information by the commercial activity EC to the user includes, in a manner known to the man in the art, the sending of suitable data signals, between the storage unit U and the terminal device of the user, and the display on the terminal device of the information carried by said signals.

Once the information concerning one or more desired or desirable products has been obtained, in the case, for example, where the desired product is not included in the list of products available from said at least one commercial activity EC and the whole list of available products in said commercial activity EC is therefore provided, the method according to the present invention comprises a further optional step of purchase, step 150, of one or more available products.

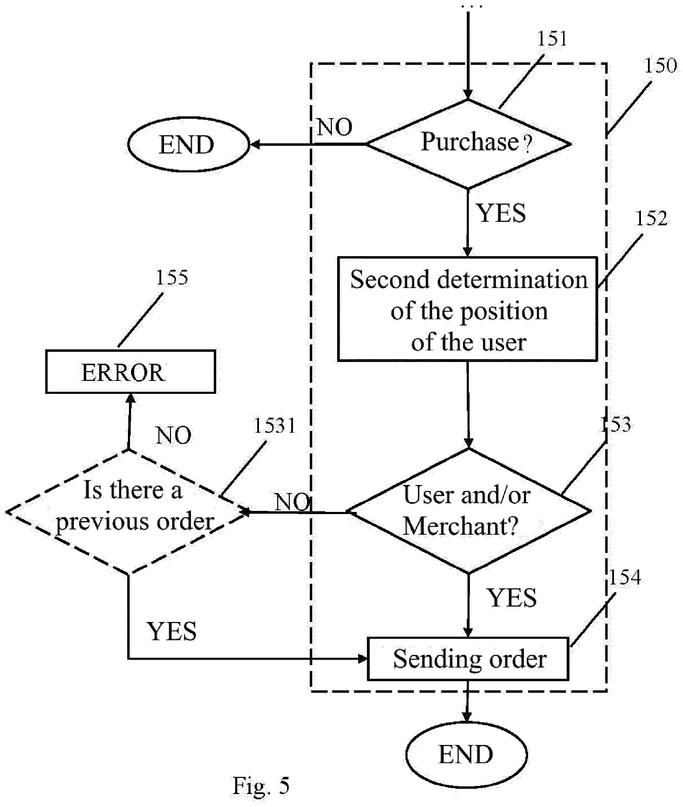

If this step of the method according to the present invention is performed (a check is carried out in step 151 of figure 5), the method provides for a second determination of the position of said at least one user, with respect to said at least one commercial activity EC (step 152); so that it is possible, for said at least one user, to send at least one purchase order (step 154), only if he is close to said at least one commercial activity EC (step 153) and if said communications network W is active; otherwise, a corresponding error message is emitted (step 155).

The purchase order, according to the method of the present invention, is contemplated to be carried out electronically and for this reason it is essential, in this step of the method, that there is a network coverage and that it is possible to establish a communication with at least one banking institute (B, in figure 6), for making the payment in real time with reference to the order made, and optionally, with a carrier T to be used for the eventual delivery of goods (T, in figure 6).

More specifically, therefore, the step 152 for determining said position of said at least one user, with respect to said at least one commercial activity EC, comprises at least one sub-step for checking the coverage of at least one communications network W (sub-step 1521 in figure 3); and if said at least one communications network W is active, a sub-step 1522 for determining the position of said at least one user by means of a geolocation function. If said at least one communications network W is not active, the method provides for a sub-step 1523 to wait for a certain time interval and to return to step 1521 to check the coverage of at least one communications network W.

Once, in the presence of network coverage, the position of the user with respect to the commercial activity EC has been determined, the method provides a step 153 for determining the distance between said position of said at least one user and a position of said at least one commercial activity EC, and if said distance is less than a certain predetermined threshold, for example 500m, the method provides for moving to said step (154) of sending at least one purchase order.

If the network coverage is found at a distance greater than said predetermined threshold, the method provides for the emission of an error message (sub-step 155 in figure 5). This is because this would mean that the user is placing the order too far from the commercial activity EC of which he has selected the products.

According to a variant, the method according to the present invention provides for the possibility of making purchase orders at a distance from a certain commercial activity EC if another order has been previously made (that is, if the user has already been a customer of the commercial activity EC from which he wants to buy products). In this case, the method according to the present invention provides an optional step for checking the existence of a previous order (step 1531) and, if so, the transition to step 154 of sending said order.

This option can also be contemplated between steps 110 and 130 described above. However, the method described above can be easily implemented by a system as described above, in each case comprising:
- at least means for verifying the position of at least one user, with respect to at least one commercial activity EC;
- at least means for identifying at least one product desired by said at least one user and available in said at least one commercial activity EC,
- at least means for storing said information relating to the at least one available product; and
- at least means for providing said information available for at least one product selected by the at least one user among the available products.

Such a system will not be described further in detail, since it is obvious to the man skilled in the art that there are multiple possible implementations of a system for performing the described method.

Thus, for example, the means for verifying the position of said at least one user are already commonly available on common terminal devices such as a smart-phone, a tablet, etc., which implement, if connectable to a communications network W, a geolocation function.

Such terminal devices, if put into communication with a storage unit U, by means of a communications network W, are capable of acquiring and transmitting images, strings of characters, voice signals and more to the storage unit U and the man skilled in the art knows how to provide such terminal devices and such a storage unit U with suitable coded instructions, for the acquisition and transmission of the above.

The same applies to the storage media and to the means for providing the information available concerning one or more desired products.

However, with a method and a system as described above, it is possible to achieve the aforementioned purposes.

With particular reference to the wine distribution sector, it will be noted that a user, for example a tourist or a visitor of a winery, when he is in such a cellar, for example during or after a tasting, can, according to the method of invention, take a picture for example of the label of the bottle of which he is tasting the wine and of which he wants to have further information.

The method requires that if the photographed label belongs to a bottle available for sale for that commercial activity EC, the user will be sent further information such as, for example, the price of the bottle and the quantity available in the cellar, the description of the wine, alcohol content and other information as described above. Once the user has selected the products to be purchased and the desired quantities, in a manner known to the expert in the field, the method involves sending a purchase order and optionally informing a carrier at the same time (T in figure 6) or the cellar itself for the collection of the product and the delivery of the same, to the user.

Advantageously, if the user photographs the label of the bottle of his interest in another place, for example in a competitor commercial activity EC, the method according to the invention would issue an error message and it would not be possible to obtain any information with respect to the photographed product, because the geolocation function (step 102) or the corresponding acquisition step of an identifier of the operator (step 103) would not allow the user to prove his proximity or presence in the cellar in which he wants to make the purchase.

In essence, in fact, the method according to the invention makes the data relating to the available products of a commercial activity EC accessible to a user only when the user is in that commercial activity EC or in its proximity. When the user moves away from this commercial activity EC, beyond a predefined distance through a threshold, the method prevents access to the data.

If a user were in a commercial activity EC with no network coverage, for example, in a cellar located below the road surface for a wine tasting, the method would still allow the user to confirm his position by acquiring an identifier of the commercial activity EC in which he is located.

In this way, the user would still have access to the data relating to the products available in that commercial activity EC and could, if desired, obtain further information concerning the desired products and make a possible purchase. Once the connection to the communications network W has been restored, for example because the user has left the cellar after the tasting is over, the method provides, if set by the user, the sending of a purchase order, only if the user is located near the commercial activity EC.

The method described above thus allows exchanging information about a product, between a user and a commercial activity EC in a selective manner, or only when the user is close to the commercial activity EC of which he wants to know the products. This allows commercial activities to restrict access to their data only to users who are located near them or at a limited distance.

Finally, it will be noted that the method and the system described above can be implemented as software, firmware and/or hardware.

In this regard, a non-limiting example of a system for implementing the method of the present invention has been provided above, but it is clear that certain components can, for example, be implemented as software running on a processor or microprocessor and that other components can, for example, be implemented as hardware and/or as specific integrated circuits.

The software can be placed in a random access memory (RAM), a memory, a read-only memory (ROM), an electrically programmable ROM, an electrically erasable programmable ROM, a register, a hard disk, a removable disk, a CD-ROM or any other storage medium well known in the art.

The information exchanged between the user and the commercial activity EC, in the specific example between tourist and wine shop or cellar, is typically in the form of signals of any suitable type and the storage unit U can be provided on supports such as a random access memory or optical storage media. The information (signals) can be transferred via communications networks, such as radio networks, satellite networks, wireless networks or wired networks, for example the Internet and the terminal devices implementing the method and the system described above are portable electronic devices or other consumer equipment that is used to store and/or output suitable signals. Although only a few embodiments of the present invention have been described, a man skilled in the art will understand that various equivalent modifications can be conceived without departing from the scope of protection offered by the following claims.

## Claims

1. Telematic method for the exchange of information between at least one user (A1, A2, A3) and at least one Commercial Activity (EC) with reference to a product, comprising the following steps:
- determining the position of said at least one user (A1, A2, A3) relatively to said at least one Commercial Activity (EC) (step 100);
- comparing said position of said at least one user (A1, A2, A3) with respect to the position of said at least one Commercial Activity (EC) (step 110);
- identifying (step 120) at least one desired product by said at least one user (A1, A2, A3) and providing (step 140), by said at least one Commercial Activity (EC), available information relative to said at least one desired product, only if said at least one user (A1, A2, A3) is located near said at least one Commercial Activity (EC) (step 120).

2. Method according to claim 1, wherein said at least one step (100) for determining said position of said at least one user (A1, A2, A3) in regard to said at least one Commercial Activity (EC) comprises the sub-steps of:
- verifying the coverage of at least one communications network (W) (step 101);
- if said at least one communications network (W) is active, determining the position of said at least one user (A1, A2, A3) by means of a geolocation function (step 102);
- if said at least one communications network (W) is inactive, determining the position of said at least one user (A1, A2, A3) by acquiring, by said user (A1, A2, A3), at least one identifier (ID_EC) of at least one Commercial Activity (EC) (104).

3. Method according to claim 2, wherein said comparison step between said position of said at least one user (A1, A2, A3) with respect to the position of said at least one Commercial Activity (EC) (step 110) comprises:
- if said at least one communications network (W) is active, calculating the distance between said position of said at least one user (A1, A2, A3) and a position of said at least one Commercial Activity (EC) (111), and
- if said distance is below a predetermined threshold, going to said step (120) for identifying at least one desired product by said at least one user (A1, A2, A3),
- otherwise, outputting an error message (step 130).

4. Method according to claim 2, wherein said comparison step between said position of said at least one user (A1, A2, A3) with respect to the position of said at least one Commercial Activity (EC) (step 110) comprises:
- if said at least one communications network (W) is inactive, comparing the acquired identifier (ID_EC)with an identifier of said at least one commercial activity (activity ID) (112), and
- if the acquired identifier (ID_EC) and the identifier of said at least one commercial activity (activity ID) match, moving to said identification step (120) of at least one desired product by said at least one user (A1, A2, A3),
- otherwise, outputting an error message (step 130).

5. Method according to any one of the preceding claims, wherein said step (120) for identifying at least one product desired by said at least one user (A1, A2, A3) comprises the sub-steps of:
- indicating, by at least one user (A1, A2, A3), at least one identifier of said at least one desired product, said identifier being an identifier to be selected between one or more among: an image, a QR code, a string of characters or a voice signal (step 121);
- comparing said at least one identifier of said at least one desired product with a predefined list of available product identifiers in said at least one Commercial Activity (EC) (step 122).

6. Method according to claim 5, wherein said step (140), by said at least one Commercial Activity (EC), of providing available information referring to said at least one desired product, comprises:
- if said comparison is positive, providing said at least one user (A1, A2, A3) with the information associated with said at least one identifier of said at least one desired product (step 141);
- otherwise, if said comparison is negative, providing said at least one user (A1, A2, A3) with the information associated with all the identification codes of said available product list in said at least one Commercial Activity (EC) (step 142).

7. Method according to claim 5 or 6, wherein said information associated with said at least one identifier of said at least one desired product are comprised among: product description, product origin, availability within said Commercial Activity (EC), delivery time, minimum and/or maximum buyable quantities, size, full price, applicable discount, label image, and the like.

8. Method according to claim 5, 6 or 7, wherein said at least one Commercial Activity (EC) is a wine shop and/or a wine cellar, and wherein said desired product is a bottle of wine.

9. Method according to claim 8, wherein said information associated with said at least one identifier of said at least one desired product are comprised among: name of the manufacturing cellar, description of the wine, year of production, type of grapes used in the production, alcohol content, a label image.

10. Method according to any one of claims 1 to 9, comprising a step of purchasing at least one desired product (step 150), said step further comprising an additional step for determining said position of said at least one user (A1, A2, A3), with respect to at least one Commercial Activity (EC) (step 152); so it is possible for at least one user (A1, A2, A3) to send at least one purchase order (step 154) only if he/she is near to at least one Commercial Activity (EC) (step 153), and if said communications network (W) is active; otherwise, a corresponding error message is output (step 155).

11. Method according to claim 10, wherein said further step of verification of said position of said at least one user (A1, A2, A3) with respect to said at least one Commercial Activity (EC) comprises the sub-steps of:
- verifying the coverage of at least one communications network (W) (sub-step 1521);
- if said at least one communications network (W) is active, determining the position of said at least one user (A1, A2, A3) by means of a geolocation function (sup-step 1522);
- if at least one communications network (W) is inactive, waiting for a certain time period (sub-step 1523) and going back to the step of coverage verifying of at least one communications network (W) (sub-step 1521).

12. Method according to claim 12, comprising, if said at least one communications network (W) is active, the step of:
- calculating the distance between said position of said at least one user (A1, A2, A3) and a position of said at least one Commercial Activity (EC) (sub-step 153); and
- if said distance is below a predetermined threshold, going to said step of sending said at least one purchase order (sub-step 154),
- otherwise, passing to said (sub-step 155) output step of said error message.

13. Method according to claim 11 or 12, wherein if said distance is greater than a predetermined threshold, and there is an earlier order by said at least one user (A1, A2, A3) in said at least one Commercial Activity (EC) (step 1531), said method passes to said step of sending said at least one purchase order (sub-step 154); otherwise, passing to said (sub-step 155) output step of said error message.

14. Information exchange system, between at least one user (A1, A2, A3) and at least one Commercial Activity (EC) regarding a desired product according to the method of claims 1 to 11, comprising:
- at least verification means (A1, A2, A3) of the position of said at least one user (A1, A2, A3) (A1, A2, A3) in respect to said at least one Commercial Activity (EC);
- at least means of identification (W, U) of at least one desired product by said at least one user (A1, A2, A3),
- at least means for the storage (U) of said available information, relative to said at least one desired product; and
- at least means for providing said available information to said at least one desired product (W, U).
